# EUROPEAN PATENT SPECIFICATION

(11) **EP 0 706 750 B1**
(45) Date of publication and mention of the grant of the patent: **17.01.2001**
(21) Application number: 95202754.8
(22) Date of filing: 12.10.1995
(51) Int. Cl.: A01D 75/20, A01D 34/66

(54) **Safety device for a protective cover in an agricultural machine**
Sicherheitsvorrichtung für Schutzorgan einer landwirtschaftlichen Maschine
Dispositif de sécurité pour organe de protection d'une machine agricole

(30) Priority: 12.10.1994 NL 9401683
(43) Date of publication of application: 17.04.1996
(73) Proprietor: Greenland Nieuw-Vennep B.V., 2153 LR Nieuw-Vennep (NL)
(72) Inventor: Vissers, Hermanus Hendrik, NL-2451 ZS Leimuiden (NL)
(74) Representative: Hoorweg, Petrus Nicolaas

(56) References cited:
- EP-A- 0 501 202
- EP-A- 0 558 431
- FR-A- 2 131 023
- GB-A- 1 119 645
- US-A- 5 203 150

## Description

The invention relates to an apparatus for cultivating agricultural crops, such as a mower, which apparatus is provided with a frame movable over the field, rotatably driven cultivating elements such as cutter discs arranged on the frame, and a cover of suitable material for protecting the environment which forms a hood over these cultivating elements, reaches close to the ground and is supported by the frame, which cover has one or more removable parts in order to provide access to the cultivating elements.

Such a device is disclosed in US-A-5 203 150.

It is a frequent occurrence with such agricultural machines that the driver of a tractor must have access to the cultivating elements during work in the field in order to carry out repair or cleaning operations. For this purpose he must wholly or partially remove safety elements such as a protective cover to enable access to the cultivating elements. It occurs here that the driver forgets to re-close these safety elements.

The invention has for its object to provide a device wherein the driver is made aware of the fact that the safety or protective cover has not been adequately replaced in the -working position. To this end the device according to the invention is distinguished in that at least one safety member is arranged which is coupled to the movable part of the cover and which is movable from a rest position to an active position in which the member protrudes downward into the cover space, and vice versa, so that the open position of the protective cover is linked with an active position of the safety member and the safety member will thereby return automatically to the non-active position when the cover part is folded back in place.

Due to the use of the safety member coupled to the movable part of the protective cover, the open position of the protective cover is linked with an active position of the safety member which acquires a function such that when the agricultural machine moves forward once again it provides a signal to the driver which indicates that the protective cover has not been replaced in the correct position.

In preference the safety member is a rod-like element which is coupled to a cover part foldable round a pivot axis. The safety member will thereby return automatically to the non-active position when the cover part is folded back in place.

If the pivot axis lies perpendicularly of the direction of forward movement it will also be possible to use the safety member as resetting means, since due to the forward movement of the agricultural machine the safety member serves as a lever to fold back into position the folding part of the cover. The safety member will in any case encounter resistance in the crop and exert a force to reset the cover part.

In another embodiment the safety member can also be coupled hingedly to the cover part, whereby a derived movement can be imparted to the safety member when the cover is folded up.

The invention will be further elucidated in the figure description hereinbelow with reference to two embodiments. In the drawing:
fig. 1 shows a perspective front view of an agricultural machine embodied as disc mower provided with a protective cover with safety member according to the invention,
fig. 2 shows a perspective rear view of another embodiment of a drum mower,
fig. 3 shows a perspective rear view of a part of the apparatus of fig. 2.

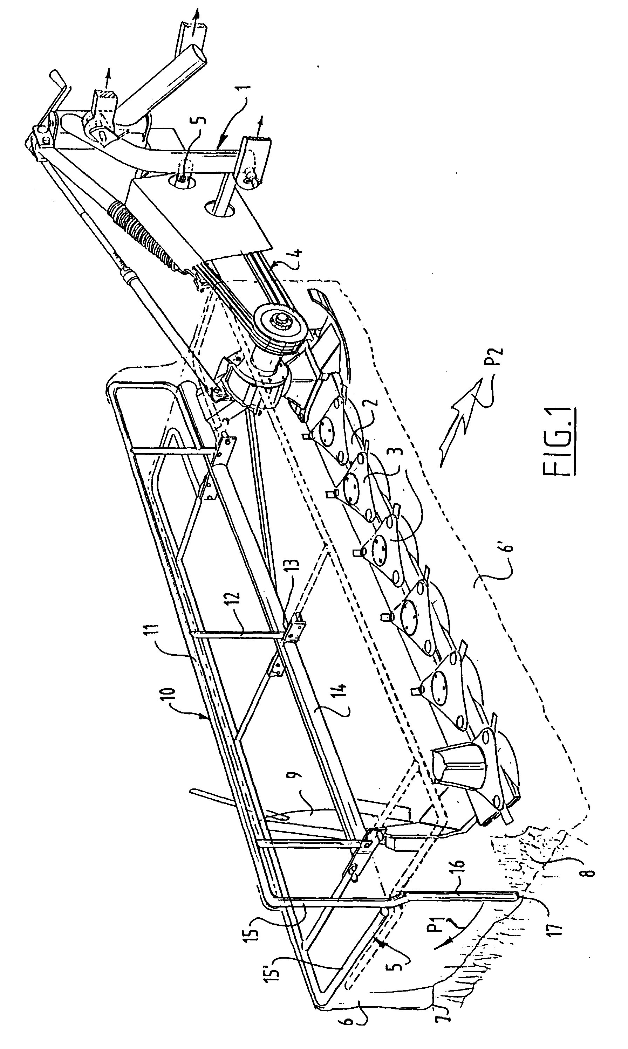

The apparatus of fig. 1 comprises a frame 1 of random nature, a cutter bar 2 supported by the frame and having thereon rotatably driven cutter discs 3, wherein the drive is effected by a transmission 4 which is driven at 5 by the central power take-off of the agricultural tractor (not shown).

Arranged above the cutter bar 2 and cutter discs 3 is a framework 5 which serves to support a protective curtain or sheet 6. The bottom edge 7 of the curtain reaches down as far as the crop G for cultivating, for instance grass which must be severed by the cutter discs 3 and subsequently laid in swaths by means of the swath guide 9.

Such an apparatus is generally known in agricultural engineering and requires no further explanation.

The framework 5 is provided with an upward foldable part 10 such that the front beam 11 thereof is moved upward and thus carries therewith the front part 6' of the curtain so that the front side of the mower beam 2 becomes accessible to the driver.

The front beam 11 is provided for this purpose with ribs 12 which are connected hingedly at 13 to the main beam 14 of the framework 5.

According to the invention the front side beam 15 of the upward foldable part 10 is embodied with a safety member 16. This safety member here forms an extended part of the side beam 15 and is constructed from the same material so that the safety member 16 here takes the form of a rod. Since it is an extension it will rotate upward in the direction of arrow P1 out of the active position according to fig. 1 to a position beside the side beam part 15' of the fixed part of framework 5, see the broken line in the drawing.

The safety member is of a length such that the bottom end 17 protrudes into the crop G in the active position drawn in full lines in fig. 1.

If the tractor is moved over the field in the direction of arrow P2 carrying therewith the agricultural machine of fig. 1, the crop G will then exert a force on the bottom end 17 of safety member 16, which force applies to the folding part 10 of the protective cover a tilting moment round the hinges 13. This force carries the protective cover back into the position indicated in dashed lines in fig. 1.

In this embodiment the safety member 16 is also used as resetting member.

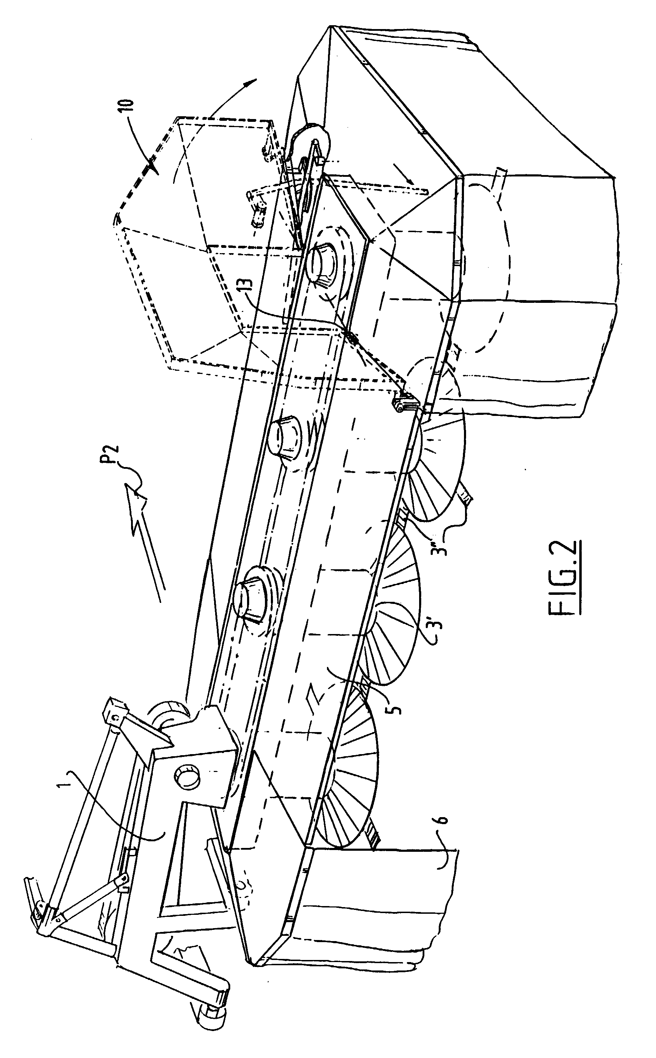

Fig. 2 shows another embodiment of the agricultural machine in the sense that the frame 1, which is likewise coupled to an agricultural tractor (not shown), supports a bar 2 which is located higher above ground level. Suspended from the underside of the cutter bar 2 are drum-shaped mowing members 3' which serve to mow the crop with the blades 3''.

The upper bar 2 is embodied with a fixed cover of plate-like material, which cover 5 serves as protection against objects flying around under the cover. The peripheral edge of cover 5 is embodied with a sheet or curtain 6.

In this embodiment the stiff cover on the right in fig. 2 is embodied with an upward foldable part 10 which is foldable round a pivot axis 13 extending parallel to the direction of movement P2.

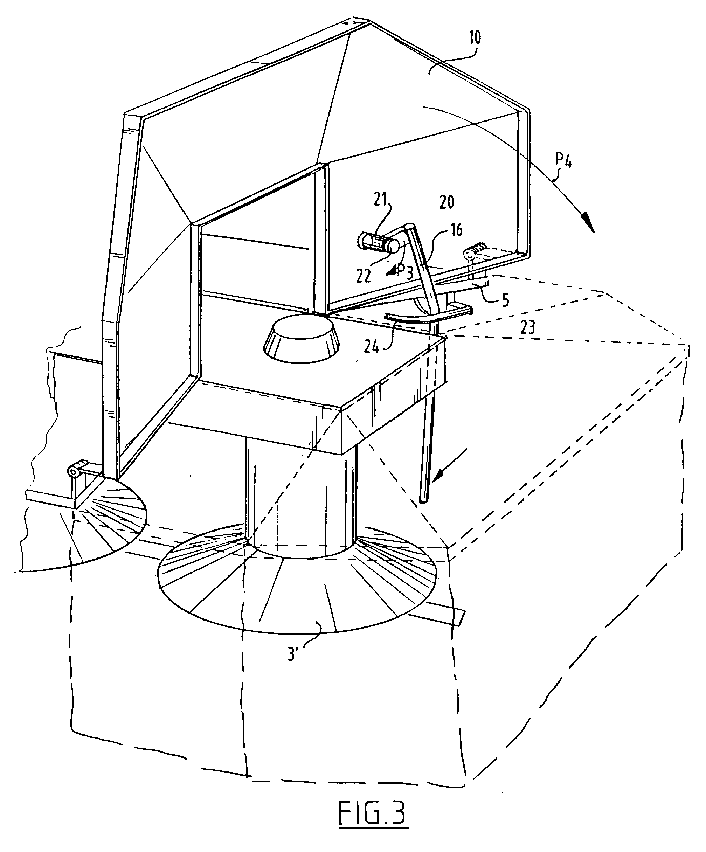

With reference to fig. 3 it can be seen that the folding part 10 is embodied on the underside with a safety member 16 which is provided on the top end 20 with a hinge 21 in the form of a sleeve which is mounted rotatably on a pin 22 fixed on the underside of cover 5.

Placed on the fixed part 5 of the cover is a hook-shaped member 23 which has an end 24 curving to the left in fig. 3. When the part 10 of cover 5 is folded upward, the bottom end 17 of safety member 16 remote from the end 20 will, due to the position of the pin 22, point downward and will do so into a plane within reach of the mower drum disc 3' furthest to the right.

This safety member 16 has two functions.

In the position shown in fig. 3, when the part 10 of protective cover 5 is folded up, the bottom end of safety member 16 will roll up the crop G just severed by the blades 3'' and not allow it to pass through between the drums to the rear to form swaths. This rolling up has an adverse effect and will be seen immediately by the driver, whereafter he can act to remedy the situation.

Alternatively, the safety member 16 can undergo a movement to the rear as a result of the hinge 21, 22, wherein the safety member will begin to pivot on the hinge in the direction of arrow P3. As a result of the curved end 24 of the fixed bracket the safety member undergoes a force transversely of the direction of movement, which force will cause a tilting moment round pivot axis 13 and will cause the cover 10 to fold back in the direction of arrow P4. In this function the safety member acts as resetting means.

The invention is not limited to the above described embodiments, wherein can be noted that the safety member may only have the function of obstructing proper crop through-feed without resetting the cover parts.

In addition the safety member may be embodied otherwise than in tubular form, wherein plates can be envisaged which in the active position extend into the space under cover part 5.

## Claims

1. Apparatus for cultivating agricultural crops, such as a mower, which apparatus is provided with a frame (1) movable over the field, rotatably driven cultivating elements such as cutter discs (3) arranged on the frame (1), and a cover (6) of suitable material for protecting the environment which forms a hood over these cultivating elements, reaches close to the ground and is supported by the frame, which cover has one or more removable parts (10) in order to provide access to the cultivating elements (3), **characterized in that** at least one safety member (16) is arranged which is coupled to the movable part (10) of the cover (6) and which is movable from a rest position to an active position in which the member (16) protrudes downward into the cover space, and vice versa, so that the open position of the protective cover (6) is linked with an active position of the safety member (16) and the safety member (16) will thereby return automatically to the non-active position when the cover part (6) is folded back in place.

2. Apparatus as claimed in claim 1, **characterized in** that the safety member (16) is a rod-like element which is coupled to a cover part (10) foldable round a pivot axis.

3. Apparatus as claimed in claims 1 and 2, **characterized in that** the rod-like member (16) is fixedly attached to the cover part (10) perpendicularly of the pivot axis (13) directed transversely of the direction of forward movement (P2).

4. Apparatus as claimed in claims 1 and 2, **characterized in that** the rod-like member (16) is coupled hingedly (21) to the upward foldable cover part (10).

5. Apparatus as claimed in any of the foregoing claims, **characterized in that** in the active position the safety member (16) protrudes downward, as seen in the direction of forward movement (P2), in a region directly in front of a cultivating element (3).

## Patentansprüche

1. Vorrichtung zum Anbauen landwirtschaftlicher Produkte, wie z. B. eine Mähmaschine, welche ausgestattet ist mit einem über das Feld bewegbaren Rahmen (1), drehbar angetriebenen Bodenbearbeitungselementen, wie z. B. Schneidscheiben (3), die auf dem Rahmen (1) angeordnet sind, und einer Abdeckung (6) aus geeignetem Material zum Schützen der Umgebung, welche eine Haube über diese Bodenbearbeitungselemente bildet, bis nahe zum Boden reicht und vom Rahmen getragen wird, wobei die Abdeckung eine oder mehrere abnehmbare Teile (10) aufweist, um Zugriff auf die Bodenbearbeitungselemente (3) zu gewähren, **dadurch gekennzeichnet,** daß wenigstens ein Sicherheitsglied (16) vorgesehen ist, welches mit dem bewegbaren Teil (10) der Abdeckung (6) gekoppelt ist und von einer Ruhestellung in eine aktive Stellung bewegbar ist, in welcher das Glied (16) nach unten in den Abdeckungsraum hinein ragt, und umgekehrt, so daß die offene Stellung der Schutzabdeckung (6) mit einer aktiven Stellung des Sicherheitsglieds (16) verbunden ist, und das Sicherheitsglied (16) kehrt daher automatisch in die nicht-aktive Stellung zurück, wenn das Abdeckungsteil (6) zurück an seine Stelle geklappt wird.

2. Vorrichtung nach Anspruch 1, **dadurch gekennzeichnet, daß** das Sicherheitsglied (16) ein stabartiges Element ist, welches mit einem Abdeckungsteil (10) gekoppelt ist, der um eine Schwenkachse klappbar ist.

3. Vorrichtung nach Anspruch 1 und 2, **dadurch gekennzeichnet, daß** das stabartige Glied (16) starr an dem Abdeckungsteil (10) senkrecht zur Schwenkachse (13) befestigt ist, welche quer zur Richtung der Vorwärtsbewegung (P2) ausgerichtet ist.

4. Vorrichtung nach Anspruch 1 und 2, **dadurch gekennzeichnet, daß** das stabartige Glied (16) schwenkbar (21) mit dem nach oben klappbaren Abdeckungsteil (10) gekoppelt ist.

5. Vorrichtung nach einem der vorhergehenden Ansprüche, **dadurch gekennzeichnet, daß** das Sicherheitsglied (16) in der aktiven Stellung nach unten in einen Bereich direkt, in der Richtung der Vorwärtsbewegung (P2) gesehen, vor einem Bodenbearbeitungselement (3) ragt.

## Revendications

1. Appareil destiné à cultiver des récoltes agricoles, tel qu'une faucheuse, lequel appareil est équipé d'un châssis (1) pouvant être déplacé à travers le champ, d'organes utilisés pour la culture entraînés de manière rotative tels que des disques à couteaux (3) agencés sur le châssis (1), et d'un cache (6) constitué d'un matériau adapté afin de protéger l'environnement, qui forme un capot sur ces organes utilisés pour la culture, s'approche très prés du sol et est supporté par le châssis, lequel cache présente une ou plusieurs éléments (10) pouvant être retirées afin de permettre l'accès aux organes utilisés pour la culture (3), caractérisé en ce qu'au moins un organe de sécurité (16) est agencé, qui est associé à l'élément mobile (10) du cache (6) et qui peut être déplacé depuis une position de repos vers une position active dans laquelle l'organe (16) fait saillie vers le bas à l'intérieur de l'espace ménagé dans le cache, et réciproquement, de telle sorte que la position ouverte du cache de protection (6) soit en liaison avec une position active de l'organe de sécurité (16) et de telle sorte que l'organe de sécurité (16) retourne ainsi automatiquement à la position non active lorsque l'organe de cache (6) est repliée pour se remettre en place.

2. Appareil selon la revendication 1, caractérisé en ce que l'organe de sécurité (16) est un organe en forme de barre qui est couplé avec un élément de cache (10) pouvant être pliée autour d'un axe de pivotement.

3. Appareil selon les revendications 1 et 2, caractérisé en ce que l'organe en forme de barre (16) est attaché de manière fixe à l'élément de cache (10) perpendiculairement à l'axe de pivotement (13) dirigé transversalement par rapport à la direction du mouvement qui s'effectue vers l'avant (P2).

4. Appareil selon les revendications 1 et 2, caractérisé en ce que l'organe en forme de barre (16) est couplé de manière pivotante (21) avec l'élément de cache (10) pouvant être plié vers le haut.

5. Appareil selon l'une quelconque des revendications précédentes, caractérisé en ce que, dans la position active, l'organe de sécurité (16) fait saillie vers le bas, comme le montre la direction du mouvement qui s'effectue vers l'avant (P2), dans une zone située directement devant un organe utilisé pour la culture (3).
